# EUROPÄISCHE PATENTSCHRIFT

(11) **EP 2 535 621 B1**
(45) Veröffentlichungstag und Bekanntmachung des Hinweises auf die Patenterteilung: **25.06.2014**
(21) Anmeldenummer: 11167707.6
(22) Anmeldetag: 26.05.2011
(51) Int. Cl.: F16J 15/40, F16J 15/44

(54) **Wellendichtungsring für ein Sperröldichtungssystem eines wasserstoffgekühlten Generators**
Shaft seal ring for a sealing oil seal system of a hydrogen-cooled generator
Joint d'étanchéité pour arbre pour un système d'huile de blocage d'un générateur refroidi à l'hydrogène

(43) Veröffentlichungstag der Anmeldung: 19.12.2012
(73) Patentinhaber: Siemens Aktiengesellschaft, 80333 München (DE)
(72) Erfinder: Cordiner, Christopher, North NE63 9EH Ashington (GB); Günther, Thomas, Dr., 40668 Meerbusch (DE); Lehmann, Christoph, Dr., 47506 Neukirchen-Vluyn (DE); Majchrzak, Oliver, 46049 Oberhausen (DE)

(56) Entgegenhaltungen:
- GB-A- 760 781
- US-A- 4 270 760
- US-A- 5 186 277

## Beschreibung

Eine rotierende elektrische Maschine, wie z.B. ein Motor oder ein Generator, weist zur Übertragung eines Drehmoments eine Welle auf. Im Betrieb der elektrischen Maschine freigesetzte Wärme, insbesondere die an der Welle freigesetzte Wärme, wird mit einem Kühlkreislauf abgeführt. Dabei wird in dem Kühlkreislauf als ein Trägermedium für die Wärme Luft, Wasser oder Wasserstoff verwendet. Vorteile von Wasserstoff im Vergleich zu Luft und Wasser liegen in einer höheren Wärmeaufnahmefähigkeit sowie in geringeren Reibungsverlusten. Um ein Austreten von Wasserstoff aus dem Kühlkreislauf zu vermeiden, wird an der Welle ein Sperröldichtungssystem verwendet. Das Sperröldichtungssystem weist einen Wellendichtungsring auf, wobei zwischen der Innenseite des Wellendichtungsrings und der Welle ein Dichtungsspalt ausgebildet ist. In der Innenseite des Wellendichtungsrings ist eine Umfangsrille vorgesehen, via die ein Sperröl in den Dichtungsspalt eingeströmt wird. Zuleitungen für das Sperröl befinden sich an den Stirnseiten oder an der Außenseite des Wellendichtungsrings.

Das Material des Wellendichtungsrings wird hinsichtlich seiner Festigkeit und seines Gleitverhaltens mit der Welle gewählt. Kommt es zu Anstreifungen von dem Wellendichtungsring an die Welle in einer sogenannten Notlaufsituation, so sind die Anforderungen an das Material derart, dass es nicht zu Beschädigungen der Oberfläche des Wellendichtungsrings oder der Oberfläche der Welle kommen darf. Die Beschädigung der Oberfläche des Wellendichtungsrings oder der Welle kann zu einer Leckage und damit zu dem Austreten von Wasserstoff aus dem Kühlkreislauf führen. Eine Ausführung des Wellendichtungsrings besteht in der Verwendung von Bronze, wobei der Dichtungsring einstückig aus einem Bronzewerkstück gefertigt ist. Bei der Verwendung des Wellendichtungsrings aus Bronze können jedoch in den Notlaufsituationen nachteilig Beschädigungen an der Oberfläche der Welle auftreten.

Eine Alternative zu der Verwendung von Bronze liegt in der Verwendung von Weißmetall, welches sich durch besseres Gleithalten mit der Welle auszeichnet. Jedoch hat das Weißmetall eine geringe Festigkeit, so dass ein ringförmiger Stützkörper aus Stahl oder Bronze verwendet wird, welcher mit einer Weißmetallschicht versehen wird. Die Weißmetallschicht wird dabei in einem Schleudergussverfahren auf die Innenseite des Stützkörpers aufgebracht. Um eine gute Anbindung von dem Weißmetall an den Stützkörper zu erreichen, wird der Stützkörper vor dem Aufbringen der Weißmetallschicht mit einer Zinnschicht versehen. Es können jedoch nachteilig Bindefehler zwischen dem Weißmetall und dem Stützkörper auftreten. Ferner können in den Notlaufsituationen Beschädigungen an der Weißmetallschicht auftreten, was eine Folge von hohen Temperaturen oder von anderen Ermüdungserscheinungen ist.

US 5 186 277 A offenbart ein Wellendichtungsring gemäß dem Oberbegriff des Anspruchs 1.

Aufgabe der Erfindung ist es, einen Wellendichtungsring für eine Sperröldichtungsvorrichtung eines wasserstoffgekühlten Generators zu schaffen, wobei der Wellendichtungsring gute Notlaufeigenschaften hat.

Der erfindungsgemäße Wellendichtungsring für ein Sperröldichtungssystem eines wasserstoffgekühlten Generators ist eingerichtet im Einbauzustand mit seiner innenseitig angeordneten Lauffläche an einer Generatorwelle radial anzuliegen und mit einem Sperröl beaufschlagt mit der Generatorwelle wasserstoffabdichtend zusammenzuwirken, dadurch gekennzeichnet, dass der Wellendichtungsring aus einem Bleibronzematerial hergestellt ist. Bei dem Vorsehen des erfindungsgemäßen Wellendichtungsrings in dem Sperröldichtungssystem treten aufgrund seines guten Gleitverhaltens mit der Generatorwelle in Notlaufsituationen vorteilhaft keine Beschädigungen an der Oberfläche des Wellendichtungsrings und an der Oberfläche der Generatorwelle auf. Dadurch kommt es zu einer längeren Lebensdauer des Wellendichtungsrings. Ferner kann der Wellendichtungsring aufgrund der hohen Festigkeit des Bleibronzematerials vorteilhaft aus einem Werkstück einstückig hergestellt werden. Dadurch entfällt ein aufwändiges Aufbringen einer Metallschicht, wodurch keine Bindefehler auftreten können und sich eine Kostenreduzierung ergibt. Des Weiteren entfällt die Notwendigkeit einer Ultraschalluntersuchung nach Herstellen des Wellendichtungsrings.

Das Bleibronzematerial weist bevorzugt zwischen 10 Massenprozent und 20 Massenprozent Blei auf. In der Lauffläche ist bevorzugt mindestens eine Umfangsrille vorgesehen, via die das Sperröl an die Generatorwelle strömbar ist und wodurch mindestens zwei Laufflächenabschnitte gebildet sind.

Bevorzugtermaßen ist in mindestens einer der Laufflächenabschnitte eine Mehrzahl an sich axial erstreckenden Schmiernuten über den Umfang verteilt vorgesehen, die jeweils in die Umfangsrille münden. Durch die Schmiernuten wird vorteilhaft ein erhöhter Sperrölfluss und eine gleichmäßigere Verteilung des Sperröls an der Lauffläche erreicht. Dadurch wird die Temperatur an der Lauffläche vorteilhaft erniedrigt, wodurch sich die Viskosität des Sperröls erhöht. Durch die Erhöhung der Viskosität treten vorteilhaft seltener Anstreifungen von dem Wellendichtungsring an die Generatorwelle auf, wodurch Beschädigungen an der Oberfläche des Wellendichtungsrings und der Generatorwelle reduziert werden.

Die axiale Erstreckung jeder Schmiernut beträgt bevorzugt zwischen 20% und 80% der Breite des Laufflächenabschnitts, in dem sie vorgesehen ist. Des Weiteren beträgt die Tiefe jeder Schmiernut bevorzugt zwischen 0,5 mm und der Tiefe der Umfangsrille. Außerdem ist die Erstreckung jeder Schmiernut in Umfangsrichtung bevorzugt maximal so lang wie ihre axiale Erstreckung.

Die Schmiernuten haben bevorzugt jeweils einen rechteckigen Grundriss. Alternativ bevorzugt verjüngen sich die Umfangsquerschnitte der Schmiernuten ausgehend von der Umfangsrille. Eine Gruppe der Schmiernuten ist bevorzugt auf dem atmosphärenseitigen Laufflächenabschnitt angeordnet. Bevorzugtermaßen ist eine andere Gruppe der Schmiernuten auf dem wasserstoffseitigen Laufflächenabschnitt angeordnet. Ferner sind bevorzugt mindestens acht gleichmäßig über den Umfang verteilte Schmiernuten vorgesehen.

Im Folgenden wird die Erfindung anhand bevorzugter Ausführungsformen des erfindungsgemäßen Wellendichtungsring anhand der beigefügten schematischen Zeichnungen erläutert.

Es zeigen:
- Figur 1: eine perspektivische Ansicht einer ersten Ausführungsform des erfindungsgemäßen Wellendichtungsrings und
- Figur 2: einen Querschnitt einer zweiten Ausführungsform des erfindungsgemäßen Wellendichtungsrings.

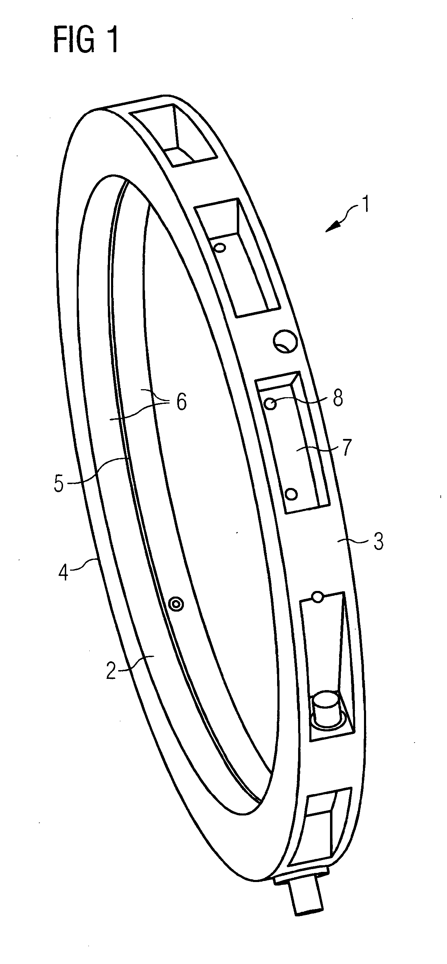

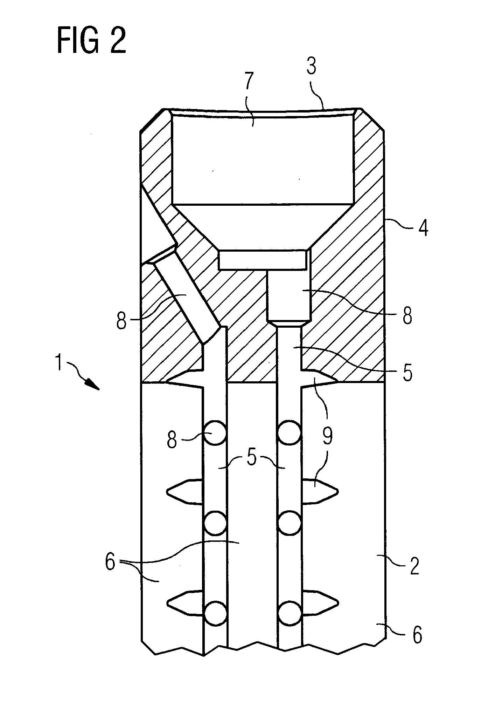

Wie es aus Figuren 1 und 2 ersichtlich ist, weist ein Wellendichtungsring 1 eine Innenfläche 2, eine Außenfläche 3 und zwei Stirnflächen 4 auf. Der Wellendichtungsring 1 ist aus einem Bleibronzematerial hergestellt, das zwischen 10 Massenprozent und 20 Massenprozent Blei aufweist. In der Außenfläche 3 ist eine Mehrzahl an Aussparungen 7 vorgesehen, in denen Öleinströmlöcher 8 eingebracht sind.

In der ersten Ausführungsform weist der Wellendichtungsring 1 gemäß Figur 1 eine Umfangsrille 5 auf, welche in der Innenfläche 2 vorgesehen ist. Von der Umfangsrille 5 bis zur Außenkante des Wellendichtungsrings 1 erstrecken sich zwei Laufflächenabschnitte 6. Die Öleinströmlöcher 8 erstrecken sich von den Aussparungen bis in die Umfangsrille 5.

Im Unterschied zu der ersten Ausführungsform weist die zweite Ausführungsform gemäß Figur 2 zwei Umfangsrillen 5 in der Innenfläche 2 auf. Dadurch sind drei Laufflächenabschnitte 6 gebildet, nämlich zwei außen liegende, welche sich von den Umfangsrillen 5 bis zu den Stirnflächen 4 erstrecken und eine innen liegende, welche sich zwischen den beiden Umfangsrillen 5 erstreckt. In jeder der beiden äußeren Laufflächenabschnitten 6 sind mindestens acht Schmiernuten 9 vorgesehen, die jeweils in die Umfangsrillen 5 münden. Ausgehend von den Umfangsrillen 5 verjüngen sich die Umfangsquerschnitte der Schmiernuten 9. In axialer Richtung erstrecken sich die Schmiernuten 9 auf einer Länge, die ca. 60% der Breite des Laufflächenabschnitts 6 entspricht, in der sie vorgesehen sind. Die Tiefe der Schmiernuten 9 beträgt ca. 25% der Tiefe der Umfangsrillen 5. Die Erstreckung der Schmiernuten 9 in Umfangsrichtung beträgt ca. 75% ihrer axialen Erstreckung. In Figur 2 sind zwei Öleinströmlöcher 8 dargestellt, wobei das rechte Öleinströmloch 8 von einer der Aussparungen 7 ausgeht, parallel zu den Stirnflächen 4 verläuft und in die rechte Umfangsrille 5 mündet. Das linke Öleinströmloch 8 geht von der linken Stirnfläche 4 aus, verläuft unter einem Winkel zu dieser und mündet in die rechte Umlaufrille 5.

Ebenso sind Ausführungsformen denkbar, in denen die Schmiernuten 9 entweder nur in dem wasserstoffseitigen oder nur in dem atmosphärenseitigen Laufflächenabschnitt 6 eingebracht sind. Des Weiteren sind Schmiernuten 9 mit rechteckigen Grundrissen denkbar. Ebenso ist denkbar, dass bei einer Ausführungsform mit Schmiernuten in dem wasserstoffseitigen und in,dem atmosphärenseitigen Laufflächenabschnitt die Schmiernuten gegeneinander versetzt angeordnet sind.

## Patentansprüche

1. Wellendichtungsring (1) für ein Sperröldichtungssystem eines wasserstoffgekühlten Generators,
wobei der Wellendichtungsring (1) eingerichtet ist im Einbauzustand mit seiner innenseitig angeordneten Lauffläche an einer Generatorwelle radial anzuliegen und mit einem Sperröl beaufschlagt mit der Generatorwelle wasserstoffabdichtend zusammenzuwirken,
**dadurch gekennzeichnet, dass**
der Wellendichtungsring (1) aus einem Bleibronzematerial hergestellt ist.

2. Wellendichtungsring (1) gemäß Anspruch 1,
wobei das Bleibronzematerial zwischen 10 Massenprozent und 20 Massenprozent Blei aufweist.

3. Wellendichtungsring (1) gemäß Anspruch 1 oder 2,
wobei in der Lauffläche mindestens eine Umfangsrille (5) vorgesehen ist, via die das Sperröl an die Generatorwelle strömbar ist und wodurch mindestens zwei Laufflächenabschnitte (6) gebildet sind.

4. Wellendichtungsring (1) gemäß Anspruch 3,
wobei in mindestens einer der Laufflächenabschnitte eine Mehrzahl an sich axial erstreckenden Schmiernuten (9) über den Umfang verteilt vorgesehen ist, die jeweils in die Umfangsrille (5) münden.

5. Wellendichtungsring (1) gemäß Anspruch 4,
wobei die axiale Erstreckung jeder Schmiernut (9) zwischen 20% und 80% der Breite des Laufflächenabschnitts (6) beträgt, in dem sie vorgesehen ist.

6. Wellendichtungsring (1) gemäß Anspruch 4 oder 5,
wobei die Tiefe jeder Schmiernut (9) zwischen 0,5 mm und der Tiefe der Umfangsrille (5) beträgt.

7. Wellendichtungsring (1) gemäß einem der Ansprüche 4 bis 6,
wobei die Erstreckung jeder Schmiernut (9) in Umfangsrichtung maximal so lang wie ihre axiale Erstreckung ist.

8. Wellendichtungsring (1) gemäß einem der Ansprüche 4 bis 7,
wobei die Schmiernuten (9) jeweils einen rechteckigen Grundriss haben.

9. Wellendichtungsring (1) gemäß einem der Ansprüche 4 bis 7,
wobei sich die Umfangsquerschnitte der Schmiernuten (9) ausgehend von der Umfangsrille (5) verjüngen.

10. Wellendichtungsring (1) gemäß einem der Ansprüche 4 bis 9,
wobei eine Gruppe der Schmiernuten (9) auf dem atmosphärenseitigen Laufflächenabschnitt (6) angeordnet ist.

11. Wellendichtungsring (1) gemäß einem der Ansprüche 4 bis 10,
wobei eine andere Gruppe der Schmiernuten (9) auf dem wasserstoffseitigen Laufflächenabschnitt (6) angeordnet ist.

12. Wellendichtungsring (1) gemäß einem der Ansprüche 4 bis 11,
wobei mindestens acht gleichmäßig über dem Umfang verteilte Schmiernuten (9) vorgesehen sind.

## Claims

1. Shaft sealing ring (1) for a barrier oil sealing system of a hydrogen-cooled generator,
wherein the shaft sealing ring (1) is designed, in the installed state, to bear radially against a generator shaft by way of its running surface arranged on the inner side and to interact with the generator shaft, under the action of a barrier oil, with hydrogen sealing,
**characterized in that**
the shaft sealing ring (1) is produced from a lead bronze material.

2. Shaft sealing ring (1) according to Claim 1,
wherein the lead bronze material comprises between 10% by mass and 20% by mass lead.

3. Shaft sealing ring (1) according to Claim 1 or 2,
wherein at least one circumferential furrow (5) is provided in the running surface, via which circumferential furrow the barrier oil can flow to the generator shaft and as a result of which at least two running surface portions (6) are formed.

4. Shaft sealing ring (1) according to Claim 3,
wherein a plurality of axially extending lubricating grooves (9) are provided distributed over the circumference in at least one of the running surface portions and each issue into the circumferential furrow (5).

5. Shaft sealing ring (1) according to Claim 4,
wherein the axial extension of each lubricating groove (9) amounts to between 20% and 80% of the width of the running surface portion (6) in which it is provided.

6. Shaft sealing ring (1) according to Claim 4 or 5,
wherein the depth of each lubricating groove (9) amounts to between 0.5 mm and the depth of the circumferential furrow (5).

7. Shaft sealing ring (1) according to one of Claims 4 to 6,
wherein the extension of each lubricating groove (9) in the circumferential direction is at most as long as the axial extension thereof.

8. Shaft sealing ring (1) according to one of Claims 4 to 7,
wherein the lubricating grooves (9) each have a rectangular outline.

9. Shaft sealing ring (1) according to one of Claims 4 to 7,
wherein the circumferential cross sections of the lubricating grooves (9) taper proceeding from the circumferential furrow (5).

10. Shaft sealing ring (1) according to one of Claims 4 to 9,
wherein one group of the lubricating grooves (9) is arranged on the running surface portion (6) on the atmosphere side.

11. Shaft sealing ring (1) according to one of Claims 4 to 10,
wherein another group of the lubricating grooves (9) is arranged on the running surface portion (6) on the hydrogen side.

12. Shaft sealing ring (1) according to one of Claims 4 to 11,
wherein at least eight lubricating grooves (9) distributed uniformly over the circumference are provided.

## Revendications

1. Joint ( 1 ) d'étanchéité d'arbre pour un système d'étanchéité à huile d'arrêt d'une génératrice à refroidissement par de l'hydrogène,
dans lequel le joint ( 1 ) d'étanchéité d'arbre est agencé pour, à l'état monté, s'appliquer radialement par sa portée disposée du côté intérieur à un arbre de génératrice et en étant alimenté par une huile d'arrêt pour coopérer d'une manière étanche à l'hydrogène avec l'arbre de la génératrice, **caractérisé en ce que**
le joint ( 1 ) d'étanchéité d'arbre est fabriqué en un matériau de bronze au plomb.

2. Joint ( 1 ) d'étanchéité d'arbre suivant la revendication 1, dans lequel le matériau en bronze au plomb comporte entre 10% en masse et 20% en masse de plomb.

3. Joint ( 1 ) d'étanchéité d'arbre suivant la revendication 1 ou 2,
dans lequel il est prévu dans la portée au moins une rainure ( 5 ) périphérique par laquelle l'huile d'arrêt peut affluer à l'arbre de la génératrice et par laquelle il est formé au moins deux parties ( 6 ) de la portée.

4. Joint ( 1 ) d'étanchéité d'arbre suivant la revendication 3, dans lequel, dans au moins l'une des parties de la portée, est répartie sur le pourtour une multitude de gorges ( 9 ) de lubrification, s'étendant en soi axialement et débouchant respectivement dans la rainure ( 5 ) périphérique.

5. Joint ( 1 ) d'étanchéité d'arbre suivant la revendication 4, dans lequel l'étendue axial de chaque gorge ( 9 ) de lubrification représente entre 20 et 80% de la largeur de la partie ( 6 ) de la portée dans laquelle elle est prévue.

6. Joint ( 1 ) d'étanchéité d'arbre suivant la revendication 4 ou 5,
dans lequel la profondeur de chaque gorge ( 9 ) de lubrification est comprise entre 0,5 mm et la profondeur de la rainure ( 5 ) périphérique.

7. Joint ( 1 ) d'étanchéité d'arbre suivant l'une des revendications 4 à 6,
dans lequel l'étendue de chaque gorge ( 9 ) de lubrification dans la direction périphérique est au maximum aussi longue que son étendue axiale.

8. Joint ( 1 ) d'étanchéité d'arbre suivant l'une des revendications 4 à 7,
dans lequel les gorges ( 9 ) de lubrification ont un tracé rectangulaire en projection horizontale.

9. Joint ( 1 ) d'étanchéité d'arbre suivant l'une des revendications 4 à 7,
dans lequel les sections transversales périphériques des gorges ( 9 ) de lubrification se rétrécissent à partir de la rainure ( 5 ) périphérique.

10. Joint ( 1 ) d'étanchéité d'arbre suivant l'une des revendications 4 à 9,
dans lequel un groupe des gorges ( 9 ) de lubrification est disposé sur la partie ( 6 ) de la portée du côté de l'atmosphère.

11. Joint ( 1 ) d'étanchéité d'arbre suivant l'une des revendications 4 à 10,
dans lequel un autre groupe des gorges ( 9 ) de lubrification est disposé sur la partie ( 6 ) de la portée du côté de l'hydrogène.

12. Joint ( 1 ) d'étanchéité d'arbre suivant l'une des revendications 4 à 11,
dans lequel il est prévu au moins huit gorges ( 9 ) de lubrification réparties uniformément sur le pourtour.
